# EUROPEAN PATENT APPLICATION

(11) **EP 3 832 906 A1**
(43) Date of publication of application: **09.06.2021**
(21) Application number: 19845384.7
(22) Date of filing: 27.06.2019
(51) Int. Cl.: H04B 10/03, H04B 10/07

(54) **MONITORING CHANNEL CONTROL METHOD, APPARATUS, AND DEVICE**

(30) Priority: 02.08.2018 CN 201810871419
(71) Applicant: ZTE Corporation, Shenzhen, Guangdong 518057 (CN)
(72) Inventor: SUN, Jun, Shenzhen, Guangdong 518057 (CN); ZHU, Xi, Shenzhen, Guangdong 518057 (CN)
(74) Representative: Petraz, Gilberto Luigi
(86) International application number: PCT/CN2019/093212
(87) International publication number: WO 2020/024735

(57) **Abstract**

Disclosed by the present invention is a monitoring channel control method, which comprises: detecting whether a monitoring channel between a local network element and an adjacent upstream network element is interrupted; if yes, issuing an attenuation adjustment back-off command to an adjustment control node, so that the adjustment control node triggers the execution of power back-off according to the location of the adjustment control node, wherein the adjustment control node is located in the local network element or the upstream network element. In addition, further provided by the present invention is an equipment; by means of the present invention, monitoring channel detection is automatically initiated after power adjustment, and if detected that the monitoring channel is interrupted, the monitoring channel will be automatically restored without human interference, ensuring that the monitoring channel remains unblocked so as to avoid communication between network elements being interrupted or losing control of a network element.

## Description

### Cross-reference to Related Applications

This application claims the priority of Chinese patent application CN 201810871419.2, entitled "Monitoring Channel Control Method, Device, and Readable Storage Device" and filed on August 2, 2018, the entirety of which is incorporated herein by reference.

### Field of the Invention

The present disclosure relates to the technical field of communications, and in particular, to a monitoring channel control method, a monitoring channel control apparatus, and a device.

### Background of the Invention

Main optical power during operation of a wavelength division system must maintain a power budget designed for the system to ensure normal operation of a receiver. At the same time, in order to ensure that capacity expansion or other operations of increasing or decreasing a wave do not affect existing service transmission, it is required that optical amplifiers in the system must all work in a gain lock state. When the system operates, if optical fiber attenuation changes, it will cause power of optical signals of a service to change, and in severe cases, the service will be interrupted. In order to reduce an impact of changing of the optical fiber attenuation on service transmission, various manufacturers have developed an automatic power adjustment function. That is, when the optical fiber attenuation changes, attenuation of an attenuator in the system or gain of an amplifier are automatically adjusted, so that the system can maintain the designed power budget.

In a power management subsystem, a power management domain starts at an output port of a last optical amplifier after a last multiplexing board of a first network element, and ends at an output port of a last optical amplifier before a first demultiplexing board of a tail network element. There may also be multiple network elements between the first network element and the last network element, and each power amplifier is used as a power monitoring point. When an optical monitoring channel performs transmission along with a main optical channel, if power in an area between two adjacent power monitoring points is improperly adjusted and controlled, the monitoring channel may be interrupted, resulting in communication between network elements being interrupted and losing control over a network element.

### Summary of the Invention

The main objective of the present disclosure is to provide a monitoring channel control method, a monitoring channel control apparatus, and a device, so as to solve the problems of communication between network elements being interrupted and losing control over a network element resulted from the monitoring channel being interrupted.

In order to achieve the above objective, the present disclosure provides a monitoring channel control method. The method includes steps of:
detecting whether a monitoring channel between a present network element and an adjacent upstream network element is interrupted; and
issuing, if yes, an attenuation adjustment back-off command to an adjustment control node, so that the adjustment control node triggers execution of power back-off according to a location of the adjustment control node, the adjustment control node being located in the present network element or the upstream network element.

Besides, in order to achieve the above objective, the present disclosure further provides a monitoring channel control apparatus. The apparatus includes:
a determining module, which is used for detecting whether a monitoring channel between a present network element and an adjacent upstream network element is interrupted; and
a command issuing module, which is used for issuing an attenuation adjustment back-off command to an adjustment control node when the determining module detects that the monitoring channel between the present network element and the adjacent upstream network element is interrupted, so that the adjustment control node triggers execution of power back-off according to a location of the adjustment control node, the adjustment control node being located in the present network element or the upstream network element.

In addition, in order to achieve the above objective, the present disclosure further provides a device, including a processor and a memory,
herein, the processor being used for executing a monitoring channel control program stored in the memory, so as to implement the above method.

By the monitoring channel control method, the monitoring channel control apparatus, and the device provided in the present disclosure, after power is adjusted, when it is determined that a monitoring channel between two adjacent network elements is interrupted, an attenuation adjustment back-off command is issued to an adjustment control node, so that the adjustment control node triggers execution of power back-off according to a location of the adjustment control node so as to restore the monitoring channel. In this way, monitoring channel detection is automatically initiated after the power is adjusted, and if it is detected that the monitoring channel is interrupted, the monitoring channel can be automatically restored without human interference, ensuring that the monitoring channel remains unblocked so as to avoid communication between network elements being interrupted or losing control of a network element.

### Brief Description of the Drawings

Fig. 1 is a schematic diagram of distribution of an optional power management subsystem for realizing various embodiments of the present disclosure;
Fig. 2 schematically shows a flowchart of a monitoring channel control method provided in Embodiment One of the present disclosure;
Fig. 3 schematically shows a sub-flowchart of the monitoring channel control method provided in Embodiment One of the present disclosure;
Fig. 4 schematically shows another flowchart of the monitoring channel control method provided in Embodiment One of the present disclosure;
Fig. 5 schematically shows another flowchart of the monitoring channel control method provided in Embodiment One of the present disclosure;
Fig. 6 is a block diagram of a device provided in Embodiment Two of the present disclosure; and
Fig. 7 is a schematic diagram of modules of a monitoring channel control program in Fig. 6.

Realization of the objective, functional features and advantages of the present disclosure will be further described with reference to accompanying drawings in conjunction with embodiments.

### Detailed Description of the Embodiments

It should be understood that, specific embodiments described herein are only for explaining the present disclose, rather than limiting the present disclosure.

In the following description, wordings such as "module", "part", or "unit" for representing an element are only used to facilitate description of the present disclosure, and the wordings themselves do not have any specific meanings. Accordingly, "module", "part", or "unit" may be used in a mixed manner.

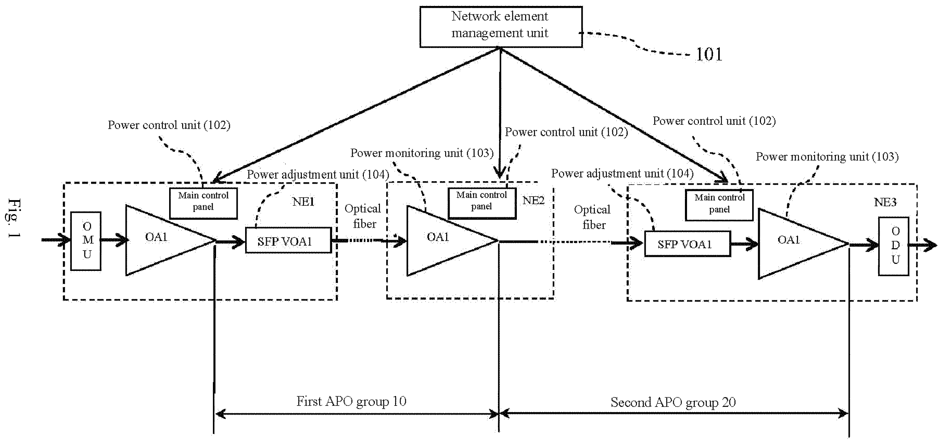

Fig. 1 is a schematic diagram of distribution of an optional power management subsystem for realizing various embodiments of the present disclosure. The power management subsystem divides a dense wavelength division multiplexing (DWDM) system into respective management units, including a network element management unit 101, a network element (NE) 1, a NE 2, and a NE3, for management and optimization respectively. In Fig. 1, a power management domain starts at an output port of a last optical amplifier (OA) after a last multiplexing board of a first NE 1, and ends at an output port of a last optical amplifier before a first demultiplexing board of a tail NE 3. One link is configured in one direction, and one optical amplifier serves as one power monitoring point. An area between two adjacent power monitoring points on the link serves as a distributive automatic power optimization (APO) group, and the APO group includes a power monitoring unit (OA) and a power adjustment unit (SFP VOA). In this way, in Fig.1, an output of a first OA101 in the NE1 to an output of a second OA102 in the NE2 form a first APO group 10, and the output of the second OA102 in the NE2 to a third OA103 in the NE3 form a second APO group 20. Different APO groups belong to different power control units, and a power control unit performs power monitoring and adjustment to an APO group which belongs to the power control unit. The power control units realize cooperative control over an upstream portion and a downstream portion of the whole link by management information transferred over a monitoring channel between network elements.

The network element management unit 101 is used for sending an APO link configuration message to APO controllers of all network elements through which a link passes.

A network element may include: a power control unit 102, a power monitoring unit 103, and a power adjustment unit 104.

The power control unit 102 operates on a main control board of each network element, and is used for controlling power adjustment of the present network element so as to perform power monitoring and adjustment and is also used for controlling power controllers of multiple network elements on the whole link to operate cooperatively.

The power monitoring unit 103 is used for querying monitoring performance by an APO controller to obtain a monitoring variable, i.e., an input variable of a power management algorithm.

The power adjustment unit 104 is used for receiving an adjustment command issued by the controller and performing power adjustment.

Various embodiments of the present embodiment are proposed based on an APO deployment and distribution diagram in Fig. 1. It may be appreciated by those skilled in the art that, the present disclosure is not limited to the number, a distribution manner and the like of respective systems and units in Fig.1.

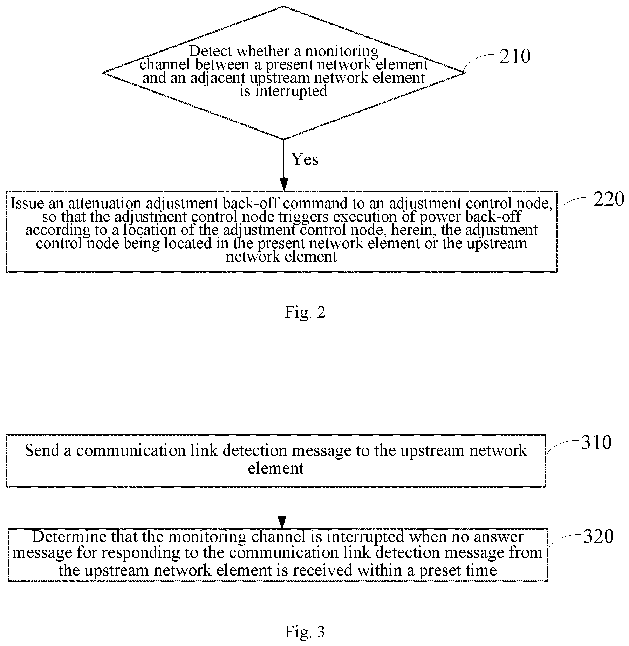

Fig. 2 shows a monitoring channel control method provided in Embodiment One of the present disclosure, which is used in a wavelength division system. In Fig. 2, the monitoring channel control method includes the following steps:
at step 210, it is detected whether a monitoring channel between a present network element and an adjacent upstream network element is interrupted; and if yes, a process enters step 220; and
at step 220, an attenuation adjustment back-off command is issued to an adjustment control node, so that the adjustment control node triggers execution of power back-off according to a location of the adjustment control node, the adjustment control node being located in the present network element or the upstream network element.

Specifically, a dedicated wavelength (1510/1550 nm) is used for performing transmission over the monitoring channel. By detecting whether communication between two adjacent network elements is normal, it is determined whether executing an adjusted power will affect the monitoring channel. When it is determined that the monitoring channel between two adjacent network elements is interrupted, it is indicated that a previous adjustment action is improper. It is required to execute adjustment back-off, and an attenuation adjustment back-off command is issued to a power adjustment node, so that execution of power back-off by a present network element or execution of power back-off by an upstream network element are triggered according to a location of the power adjustment node, so as to restore the monitoring channel. In contrary, when it is determined that the monitoring channel between two adjacent network elements is not interrupted, it is indicated that a previous adjustment action is proper. There is no need to execute adjustment back-off, and a process ends.

As shown in Fig. 3, step 210 specifically includes the following steps:
at step 310, a communication link detection message is sent to the upstream network element; and
at step 320, when no answer message for responding to the communication link detection message from the upstream network element is received within a preset time, it is determined that the monitoring channel is interrupted.

Specifically, an answer message for power adjustment is received; monitoring channel detection is initiated; and a communication link detection message is sent to an upstream node. It is determined whether an answer message sent by an upstream network element apparatus is received within a preset time. When no answer message for responding to the communication link detection message from the upstream network element apparatus is received after a preset time is up, it is indicated that the monitoring channel is interrupted, and it is required to execute adjustment back-off. In contrary, when an answer message for responding to the communication link detection message from the upstream network element apparatus is received before a preset time is up, it is indicated that the monitoring channel is not interrupted, and there is no need to execute adjustment back-off.

The monitoring channel control method of the present disclosure is suitable for use either in a scenario in which an adjustment control node is in a same network element or in in a scenario in which an adjustment control node is in a different network element. The monitoring channel control method of the present disclosure further includes a step of:
determining whether the adjustment control node is located in the present network element or the upstream network element.

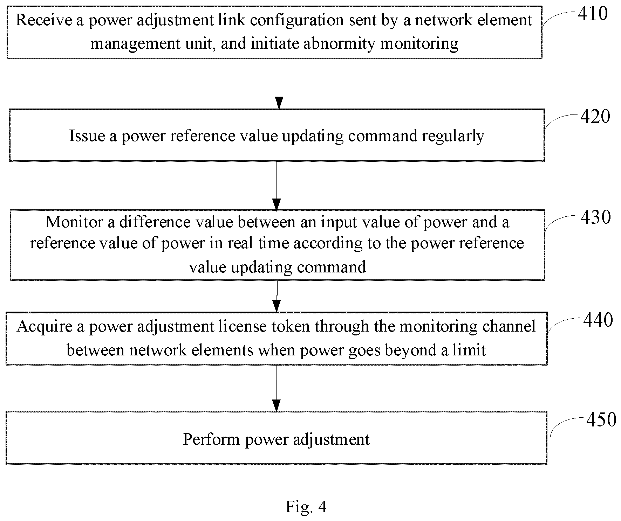

As shown in Fig. 4, if the adjustment control node is located in the present network element, for example, in Fig. 1, a power adjustment unit 104 in the second APO group 20 and a power control unit 102 to which the power adjustment unit 104 belongs are both located at the NE3, the monitoring channel control method further includes the following steps:
at step 410, a power adjustment link configuration sent by a network element management unit is received, and abnormity monitoring is initiated;
at step 420, a power reference value updating command is issued regularly;
at step 430, a difference value between an input value of power and a reference value of power are monitored in real time according to the power reference value updating command;
at step 440, when power goes beyond a limit, a power adjustment license token is acquired through the monitoring channel between network elements; and
at step 450, power adjustment is performed.

Specifically, a network element management unit (such as a network element management unit 101 in Fig. 1) sends an APO link configuration message to APO controllers of all network elements through which a link passes. When a power adjustment link configuration sent by the network element management unit is received, abnormity monitoring is initiated. A power reference value updating command is issued regularly, and a difference value between an input value of power and a reference value of power are monitored in real time according to the command. If power goes beyond a limit, it is reported that a power fluctuation goes beyond a limit. If the power does not go beyond the limit, it is indicated that a present node is a normal node.

When the power goes beyond the limit, an adjustment license token is applied for through the monitoring channel between network elements. After an adjustment token of the present link is acquired, an adjustment command is issued, and power adjustment is performed. When the adjustment is performed successfully, an answer message for power adjustment is generated, so as to initiate monitoring channel detection.

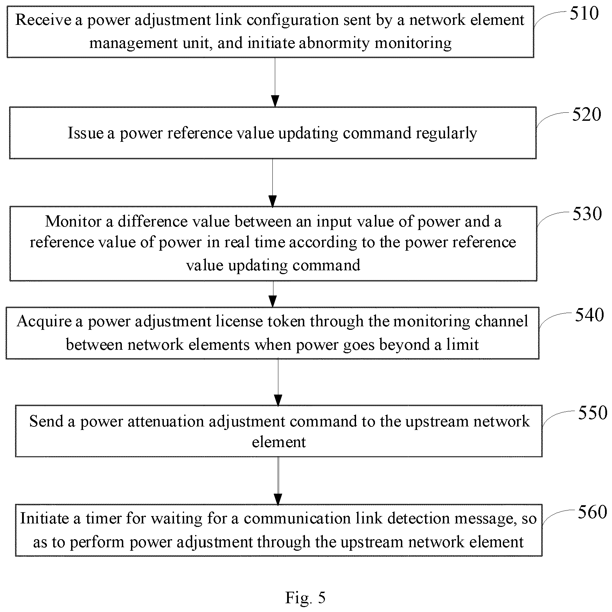

As shown in Fig. 5, if the adjustment control node is located in the upstream network element, for example, in Fig. 1, a power adjustment unit 104 in the first APO group 10 is located at the NE1, and a power control unit 102 to which the power adjustment unit 104 belongs is located at the NE2, the monitoring channel control method further includes the following steps:
at step 510, a power adjustment link configuration sent by a network element management unit is received, and abnormity monitoring is initiated;
at step 520, a power reference value updating command is issued regularly;
at step 530, a difference value between an input value of power and a reference value of power are monitored in real time according to the power reference value updating command;
at step 540, when power goes beyond a limit, a power adjustment license token is acquired through the monitoring channel between network elements;
at step 550, a power attenuation adjustment command is sent to the upstream network element; and
at step 560, a timer for waiting for a communication link detection message is initiated, so as to perform power adjustment through the upstream network element.

Specifically, a network element management unit (such as a network element management unit 101 in Fig. 1) sends an APO link configuration message to APO controllers of all network elements through which a link passes. When a power adjustment link configuration sent by the network element management unit is received, abnormity monitoring is initiated. A power reference value updating command is issued, and a difference value between an input value of power and a reference value of power are monitored in real time according to the command. If power goes beyond a limit, it is reported that a power fluctuation goes beyond a limit. If the power does not go beyond the limit, it is indicated that a present node is a normal node.

When the power goes beyond the limit, an adjustment license token is applied for through the monitoring channel between network elements. After an adjustment token of the present link is acquired, since the power adjustment unit is located in the upstream network element (in Fig. 1, the power adjustment unit 104 in the first APO group 10 is located at the NE1), an attenuation adjustment command is sent to a power control unit 102 of the upstream network element (NE1); and meanwhile a timer for waiting for a communication link detection message is initiated, so as to perform power adjustment through the power control unit 102 of the upstream network element. When the adjustment is performed successfully, an answer message for power adjustment is generated, so as to initiate monitoring channel detection.

By the monitoring channel control method provided in the present disclosure, after the power is adjusted, when it is determined that a monitoring channel between two adjacent network elements is interrupted, an attenuation adjustment back-off command is issued, and power back-off is executed according to the back-off command, so as to restore the monitoring channel. In this way, monitoring channel detection is automatically initiated after the power is adjusted, and if it is detected that the monitoring channel is interrupted, the monitoring channel can be automatically restored without human interference, ensuring that the monitoring channel remains unblocked so as to avoid communication between network elements being interrupted or losing control of a network element.

### Embodiment Two

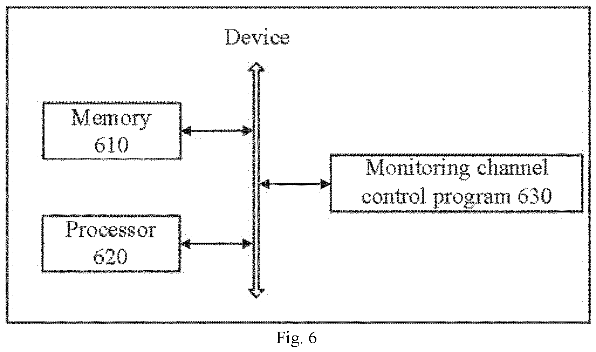

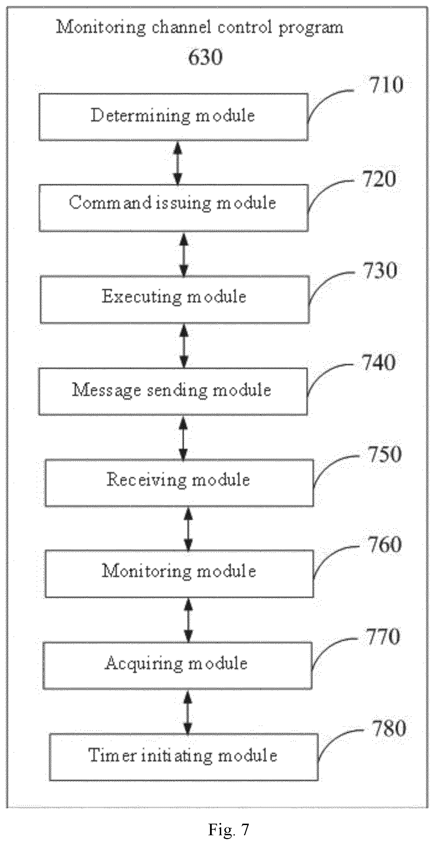

Fig. 6 is a schematic diagram of hardware architecture of a device provided in Embodiment Two of the present disclosure. In Fig. 6, a terminal includes: a memory 610, a processor 620, and a monitoring channel control program 630 which is stored on the memory 610 and can be run on the processor 620. In the present embodiment, the monitoring channel control program 630 includes a series of computer program instructions stored on the memory 610. The computer program instructions, when executed by the processor 620, may implement monitoring channel control operations of various embodiments of the present disclosure. In some embodiments, based on specific operations implemented by respective portions of the computer program instructions, the monitoring channel control program 630 may be divided into one or more modules. As shown in Fig. 7, the monitoring channel control program 630 includes: a determining module 710, a command issuing module 720, an executing module 730, a message sending module 740, a receiving module 750, a monitoring module 760, an acquiring module 770, and a timer initiating module 780.

The determining module 710 is used for detecting whether a monitoring channel between a present network element and an adjacent upstream network element is interrupted, and if yes, the command issuing module 720 is triggered.

The command issuing module 720 is used for issuing an attenuation adjustment back-off command to an adjustment control node, so that the adjustment control node triggers the executing module 730 according to a location of the adjustment control node, the adjustment control node being located in the present network element or the upstream network element.

The executing module 730 executes power back-off according to the back-off command, so as to restore the monitoring channel.

Specifically, a dedicated wavelength (1510/1550 nm) is used for performing transmission over the monitoring channel. By detecting whether communication between two adjacent network elements is normal, it is determined whether executing an adjusted power will affect the monitoring channel. When the determining module 710 determines that the monitoring channel between two adjacent network elements is interrupted, it is indicated that a previous adjustment action is improper. It is required to execute adjustment back-off, and the command issuing module 720 issues an attenuation adjustment back-off command to a power adjustment node, so that the executing module 730 of the present network element is triggered to execute power back-off according to the command according to a location of the power adjustment node so as to restore the monitoring channel; or an adjustment control node triggers an upstream network element to execute power back-off. In contrary, when the determining module 710 determines that the monitoring channel between two adjacent network elements is not interrupted, it is indicated that a previous adjustment action is proper. There is no need to execute adjustment back-off, and a process ends.

The message sending module 740 is used for sending a communication link detection message to the upstream network element.

The determining module 710 is further used for determining whether an answer message for responding to the communication link detection message from the upstream network element is received within a preset time, and if no, it is determined that the monitoring channel is interrupted.

Specifically, an answer message for power adjustment is received; monitoring channel detection is initiated; and the message sending module 740 sends a communication link detection message to an upstream node. The determining module 710 determines whether an answer message sent by an upstream network element apparatus is received within a preset time. When no answer message for responding to the communication link detection message from the upstream network element apparatus is received after a preset time is up, it is indicated that the monitoring channel is interrupted, and it is required to execute adjustment back-off. In contrary, when an answer message for responding to the communication link detection message from the upstream network element apparatus is received before a preset time is up, it is indicated that the monitoring channel is not interrupted, and there is no need to execute adjustment back-off.

The monitoring channel control method of the present disclosure is suitable for use either in a scenario in which an adjustment control node is in a same network element or in in a scenario in which an adjustment control node is in a different network element. The monitoring channel control method of the present disclosure further includes that:
the determining module 710 is further used for determining whether the adjustment control node is located in the present network element or the upstream network element.

If the adjustment control node is located in the present network element, for example, in Fig. 1, a power adjustment unit 104 in the second APO group 20 and a power control unit 102 to which the power adjustment unit 104 belongs are both located at the NE3, the receiving module 750 is used for receiving a power adjustment link configuration sent by a network element management unit and initiating abnormity monitoring;
the command issuing module 720 is further used for issuing a power reference value updating command regularly;
the monitoring module 760 is used for monitoring a difference value between an input value of power and a reference value of power in real time according to the power reference value updating command;
when the determining module 710 determines that power goes beyond a limit, the acquiring module 770 is triggered to acquire a power adjustment license token through the monitoring channel between network elements; and
the executing module 730 is further used for performing power adjustment.

Specifically, a network element management unit (such as a network element management unit 101 in Fig. 1) sends an APO link configuration message to APO controllers of all network elements through which a link passes. When a power adjustment link configuration sent by the network element management unit is received, abnormity monitoring is initiated. The command issuing module 720 issues a power reference value updating command regularly, and the monitoring module 760 monitors a difference value between an input value of power and a reference value of power in real time according to the command. If power goes beyond a limit, it is reported that a power fluctuation goes beyond a limit. If the power does not go beyond the limit, it is indicated that a present node is a normal node.

When the power goes beyond the limit, the acquiring module 770 applies for an adjustment license token through the monitoring channel between network elements. After an adjustment token of the present link is acquired, the command issuing module 720 issues an adjustment command, and the executing module 730 performs power adjustment. When the adjustment is performed successfully, an answer message for power adjustment is generated, so as to initiate monitoring channel detection.

If the adjustment control node is located in the upstream network element, for example, in Fig. 1, a power adjustment unit 104 in the first APO group 10 is located at the NE1, and a power control unit 102 to which the power adjustment unit 104 belongs is located at the NE2, the message sending module 740 is triggered, and the message sending module 740 is further used for sending a power attenuation adjustment command to the upstream network element; and
the timer initiating module 780 is used for initiating a timer for waiting for a communication link detection message, so as to perform power adjustment through the upstream network element.

If the adjustment control node is deployed in a different network element and power goes beyond a limit, after an adjustment token of the present link is acquired, since the power adjustment unit is located in the upstream network element (in Fig. 1, the power adjustment unit 104 in the first APO group 10 is located at the NE1), the message sending module 740 sends an attenuation adjustment command to a power control unit 102 of the upstream network element (NE1); and meanwhile the timer initiating module 780 initiates a timer for waiting for a communication link detection message, so as to perform power adjustment through the power control unit 102 of the upstream network element. When the adjustment is performed successfully, an answer message for power adjustment is generated, so as to initiate monitoring channel detection.

By the monitoring channel control device provided in the present disclosure, after the power is adjusted, the determining module 710 determines that a monitoring channel between two adjacent network elements is interrupted; and the command issuing module 720 issues an attenuation adjustment back-off command, so that the adjustment control node triggers, according to a location thereof, the executing module 730 to execute power back-off according to the back-off command, so as to restore the monitoring channel. In this way, monitoring channel detection is automatically initiated after the power is adjusted, and if it is detected that the monitoring channel is interrupted, the monitoring channel can be automatically restored without human interference, ensuring that the monitoring channel remains unblocked so as to avoid communication between network elements being interrupted or losing control of a network element.

An embodiment of the present disclosure further provides a computer readable storage medium. The computer readable medium stores one or more programs. The computer readable storage medium may include a volatile memory, such as a random access memory, may also include a non-volatile memory, such as a read only memory, a flash memory, a hard disk drive, or a solid state drive, and may also include a combination of the above types of memory. One or more programs in the computer readable storage medium may be executed by one or more processors, so as to implement the monitoring channel control method provided in the above Embodiment One.

It should be noted that, herein, terms "comprise", "include" or any other variation thereof, are intended to cover a non-exclusive inclusion, such that a process, method, article, or apparatus that comprises a list of elements does not include only those elements but may include other elements not expressly listed or elements inherent to such process, method, article, or apparatus. An element preceded by "comprises a..." does not, without more constraints, preclude the existence of additional identical elements in the process, method, article, or apparatus that comprises the element.

The serial numbers of the above embodiments are used for description only, and do not represent a preference for the embodiments.

Through the above description of the embodiments, those skilled in the art can clearly understand that the method in the above embodiments may be implemented by means of software and a necessary general hardware platform or by means of hardware for sure, but the former is a preferred implementation manner in most cases. Based on such understanding, the technical solutions of the present disclosure essentially or the portions that contribute to existing technologies may be embodied in the form of a software product. The computer software product is stored in a storage medium (such as an ROM/RAM, a diskette, or an optical disk), and includes several instructions which enable a terminal (which may be a mobile phone, a computer, a server, an air conditioner, or a network device and so on) to implement the methods in various embodiments of the present disclosure.

Embodiments of the present disclosure are described above with reference to the accompanying drawings, but the present disclosure is not limited to the above specific embodiments. The above implementation manners are only exemplary other than restrictive. Inspired by the present disclosure, one ordinary skilled in the art may also make many forms without departing from the principle of the present disclosure and the protection scope defined by the claims, and these forms all fall into the protection scope of the present disclosure.

## Claims

1. A monitoring channel control method, wherein the method comprises steps of:
detecting whether a monitoring channel between a present network element and an adjacent upstream network element is interrupted; and
issuing, if yes, an attenuation adjustment back-off command to an adjustment control node, so that the adjustment control node triggers execution of power back-off according to a location of the adjustment control node, wherein the adjustment control node is located in the present network element or the upstream network element.

2. The monitoring channel control method according to claim 1, wherein before the step of detecting whether a monitoring channel between a present network element and an adjacent upstream network element is interrupted, the method further comprises a step of:
monitoring a difference value between an input value of power and a reference value of power in real time.

3. The monitoring channel control method according to claim 2, wherein before the step of monitoring a difference value between an input value of power and a reference value of power in real time, the method further comprises a step of:
determining whether the adjustment control node is located in the present network element or the upstream network element.

4. The monitoring channel control method according to claim 3, wherein when the adjustment control node is located in the present network element, the method further comprises steps of:
acquiring a power adjustment license token through the monitoring channel between network elements; and
issuing, according to the power adjustment license token, a power adjustment command, to perform power adjustment; and
wherein when the adjustment control node is located in the upstream network element, the method further comprises steps of:
acquiring a power adjustment license token through the monitoring channel between network elements; and
sending a power attenuation adjustment command to the upstream network element, to perform power adjustment through the upstream network element.

5. The monitoring channel control method according to claim 4, wherein after the step of sending an attenuation adjustment command to the upstream network element, the method further comprises a step of:
initiating a timer for waiting for a communication link detection message.

6. The monitoring channel control method according to claim 2, wherein before monitoring abnormity on the communication link, the method further comprises a step of:
receiving a power adjustment link configuration sent by a network element management unit, and initiating abnormity monitoring.

7. The monitoring channel control method according to claim 5, wherein the step of detecting whether a monitoring channel between a present network element and an adjacent upstream network element is interrupted comprises steps of:
sending a communication link detection message to the upstream network element; and
determining whether an answer message for responding to the communication link detection message from the upstream network element is received within a preset time, wherein if no, it is determined that the monitoring channel is interrupted.

8. A monitoring channel control apparatus, wherein the apparatus comprises:
a determining module, which is used for detecting whether a monitoring channel between a present network element and an adjacent upstream network element is interrupted; and
a command issuing module, which is used for issuing an attenuation adjustment back-off command to an adjustment control node when the determining module detects that the monitoring channel between the present network element and the adjacent upstream network element is interrupted, so that the adjustment control node triggers execution of power back-off according to a location of the adjustment control node, wherein the adjustment control node is located in the present network element or the upstream network element.

9. A device, comprising a processor and a memory,
wherein the processor is used for executing a monitoring channel control program stored in the memory, so as to implement the method according to any of claims 1 to 7.
